# EUROPEAN PATENT SPECIFICATION

(11) **EP 3 214 340 B1**
(45) Date of publication and mention of the grant of the patent: **15.07.2020**
(21) Application number: 15866642.0
(22) Date of filing: 08.12.2015
(51) Int. Cl.: F16H 1/16, F16C 35/067, F16C 19/06

(54) **WORM REDUCER AND ELECTRICALLY DRIVEN ASSIST DEVICE**
SCHNECKENREDUKTIONSGETRIEBE UND ELEKTRISCH ANGETRIEBENE HILFSVORRICHTUNG
RÉDUCTEUR À VIS SANS FIN ET DISPOSITIF D'ASSISTANCE À ENTRAÎNEMENT ÉLECTRIQUE

(30) Priority: 11.12.2014 JP 2014251020; 25.11.2015 JP 2015229838
(43) Date of publication of application: 06.09.2017
(73) Proprietor: NSK Ltd., Tokyo 141-8560 (JP)
(72) Inventor: SEGAWA, Toru, Maebashi-shi, Gunma 371-8527 (JP); UENO, Seiji, Maebashi-shi, Gunma 371-8527 (JP)
(74) Representative: Mewburn Ellis LLP
(86) International application number: PCT/JP2015/084437
(87) International publication number: WO 2016/093247

(56) References cited:
- JP-A- 2001 099 173
- JP-A- 2004 249 767
- JP-A- 2009 299 776
- JP-A- 2014 193 638

## Description

### Technical Field

The present invention relates to an improvement of a worm reducer to be assembled, for example, in an electric power steering device.

### Background Art

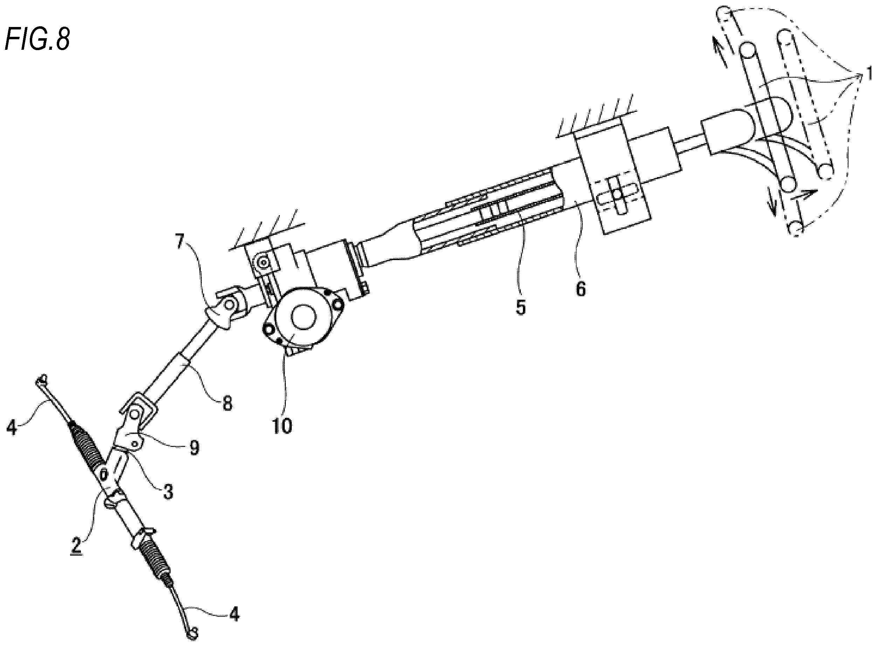

As shown in Fig. 8, a steering device for an automobile is configured such that a rotation of a steering wheel 1 is transmitted to an input shaft 3 of a steering gear unit 2, and a pair of left and right tie rods 4, 4 are pushed or pulled along with rotation of the input shaft 3 to apply a steering angle to front wheels. The steering wheel 1 is supported and fixed to a rear end portion of a steering shaft 5, and the steering shaft 5 is rotatably supported by a cylindrical steering column 6 while being inserted in the steering column 6 in an axial direction. A front end portion of the steering shaft 5 is connected to a rear end portion of an intermediate shaft 8 through a universal joint 7, and a front end portion of the intermediate shaft 8 is connected to the input shaft 3 through another universal joint 9.

In the above-described steering device, there has been known an electric power steering device including an electric assist device for reducing a force required to operate the steering wheel 1 while using an electric motor 10 as an auxiliary power source. A reducer is assembled in such an electric power steering device. As such reducer, there has been widely known a worm reducer having a large lead angle and reversibility with respect to a transmission direction of the power as described in Patent Document 1 or the like. Fig. 9 shows an example of a conventionally widely known worm reducer, the structure of which is different from the structure described in Patent Document 1 though. The worm reducer 11 includes a housing 12, a worm wheel 13, and a worm 14.

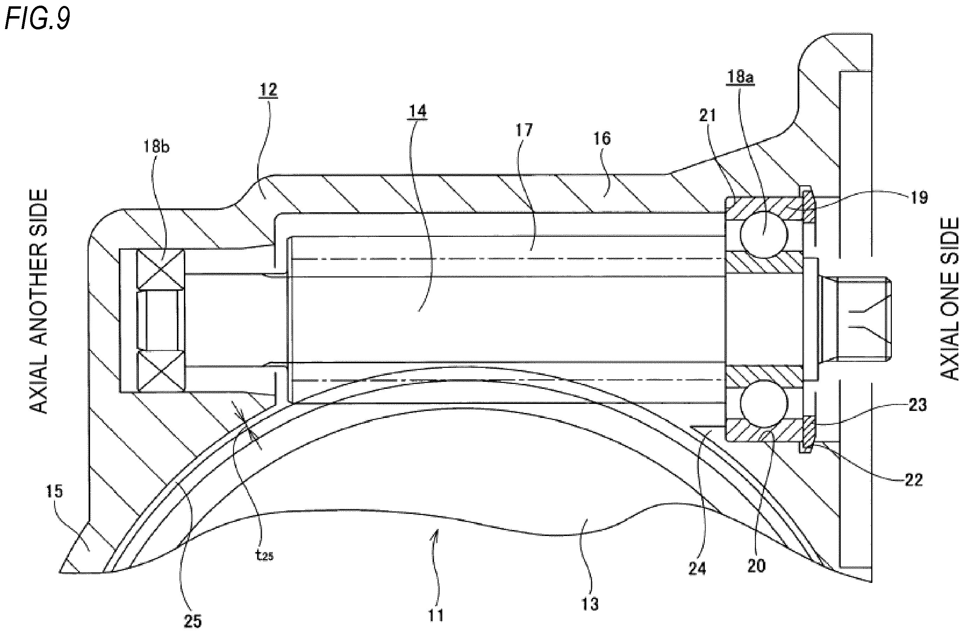

The housing 12 is supported and fixed to the electric motor 10 (see Fig. 8), and includes a wheel accommodation portion 15 and a worm accommodation portion 16 which is arranged at a skew position with respect to the wheel accommodation portion 15 and has an axial intermediate portion connected to the wheel accommodation portion 15. The worm wheel 13 is supported and fixed to a front end side portion of a driven shaft, namely the steering shaft 5 (see Fig. 8), concentrically with the steering shaft 5 which is rotatably supported inside the wheel accommodation portion 15. Incidentally, a radial clearance 25 is provided between an outer circumferential surface of the worm wheel 13 and an inner circumferential surface of the wheel accommodation portion 15 to prevent the worm wheel 13 from contacting the wheel accommodation portion 15 during operation of the worm reducer 11 (during rotation of the worm wheel 13). The thickness (the dimension in the radial direction of the worm wheel 13) t25 of the radial clearance 25 is set to 0.5-2.0 mm although varying according to types of automobile and usage and the like in which the worm reducer 11 is used. In a state where worm teeth 17 which are provided in an axial (unless otherwise stated, the axial, radial and circumferential direction in the specification and claims refer to the direction with respect to the worm) intermediate portion of the worm 14 is engaged with the worm wheel 13, the worm 14 is rotatably supported inside the worm accommodation portion 16 at two axial positions which interpose the worm teeth 17 by a pair of rolling bearings 18a, 18b of a deep groove ball bearing and the like. Such worm 14 is connected with an output shaft of a drive shaft, namely the electric motor 10, at an axial end portion (a base end portion, the right end portion in Fig. 9). That is, the worm 14 can be rotationally driven by the electric motor 10.

In view of reduction in size, the conventional worm reducer as described above has room for improvement. That is, an outer ring 19 configuring the rolling bearing 18a that is supported and fixed on a base end side portion of the worm 14 (the right side in Fig. 9) and that is one of the pair of the rolling bearing 18a, 18b is internally fitted to a holding portion 20 that is provided on an opening side portion of the warm accommodation portion 16, and an axial another side face (the left side face in Fig. 9) is abutted against a stepped surface 21 formed at an axial another end portion of the holding portion 20. In this state, in the opening of the worm accommodation portion 16, a locking groove 22 that is formed circumferentially in a portion adjacent to an axial one side of the holding portion 20 (an portion adjacent to an opposite side of the stepped surface 21) is locked with an inner diameter side portion of a locking ring 23, and the axial another side face of an outer diameter side portion of the locking ring 23 is abutted against the axial one side face of the outer ring 19. Accordingly, the axial displacement of the outer ring 19 is restricted. During operation of the worm reducer 11 (the electric motor 10 is driven), a counter force is applied to the worm 14 from an engagement portion between the worm teeth 17 that are provided on the worm 14and the worm wheel 13. An axial component of the counter force is reversed from the direction of action according to the transmit torque direction from the worm 14 to the worm wheel 13 and is supported by the stepped surface 21 and the locking ring 23. Therefore, an axial thickness of the axial another side of the stepped surface 21 in the housing 12 is required (circumferentially) at least certain degree, so as to sufficiently ensure the strength of that portion. In the conventional configuration shown in Fig. 9, in a continuous portion between the worm accommodation portion 16 and the wheel accommodation portion 15, a wheel-side support portion 24 having a cross section of a substantially triangular shape is formed in the axial another side of the stepped surface 21. An axial dimension of the wheel-side support portion 24 is set to 0.5-2.0 mm although varying according to types of automobile and usage and the like in which the worm reducer 11 is used (the size of the axial component of the counter force that is applied to the worm 14 from the engagement portion). The presence of the wheel-side support portion 24 leads to increase of the length of the worm accommodation portion 16 along the axial direction of the worm 14 and enlargement of the worm reducer 11, which is not preferable.

JP 2004-249767 A discloses an electric power steering device having a worm coupled to an output shaft of an electric motor, a worm wheel engaged with the worm, and a rolling bearing wherein an outer ring is loosely fitted with a housing. A shaft part of the worm is pressed in an inner ring of the rolling bearing, and an annular groove is provided on a peripheral surface of the shaft contacted by this pressing-in or a peripheral surface of the inner ring.

JP 2009-299776 A discloses a worm reduction gear having a nonslip structure of a first rolling bearing. A spacer ring is fitted in a fitting recessed part formed on an inner surface of a housing, and a butting part constituting this spacer ring is butted against one end surface in the axial direction of an outer ring constituting the first rolling bearing. A retaining ring is locked in a locking groove formed in a part dislocated to one end side in the axial direction from the spacer ring by a part of an inner surface of the fitting recessed part while pressing its one surface to this spacer ring.

### Prior Art Document

### Patent Document

Patent Document 1: JP-A-2004-306898

### Summary of the Invention

### Problems to be solved by the Invention

The present invention has been made in consideration of the above-mentioned circumstances for realizing a worm reducer configuration by which reduction in size is easily achieved.

### Means for Solving the Problem

A worm reducer of the present invention is as set out in claim 1. An electric assist device of the present invention is as set out in claim 3.

The worm reducer includes a housing, a worm wheel and a worm.

The worm wheel is supported on a driven shaft rotatably supported by the housing to be concentric with the driven shaft and rotates together with the driven shaft.

In a state where an axial one end portion (base end portion) is joined with a drive shaft provided at a skew position with respect to the driven shaft, and worm teeth provided on an axial intermediate portion are engaged with the worm wheel, an axial one side portion with respect to a portion where the worm teeth are provided is rotatably supported by a bearing with respect to the housing.

In the worm reducer of the present invention, the bearing is a rolling bearing which includes: an outer ring having an outer ring raceway on an inner circumferential surface; an inner ring having an inner ring raceway on an outer circumferential surface; and a plurality of rolling elements rotatably arranged between the outer ring raceway and the inner ring raceway. Furthermore, an outer circumferential surface of an axial one end portion of the outer ring is provided with a flange portion which protrudes radially outward. The housing is formed with a holding portion to be internally fitted with the outer ring. In a state where an axial another side portion of the outer ring is internally fitted in an axial another side portion of the holding portion and an axial another side face of the flange portion is abutted against an axial one side face of the housing, an axial another side face of a retaining plate supported to the housing is abutted against an axial one side face of the flange portion. In other words, the flange portion is sandwiched in the axial direction between the axial one side face of the housing and the axial another side face of the retaining plate.

In implementing the worm reducer of the present invention described above, the worm reducer may be preferably configured such that the axial another side face of the outer ring is not abutted against any portion of the housing.

In implementing the worm reducer of the present invention described above, the flange portion is preferably arranged at an entire circumference or at intervals in the circumferential direction on the outer circumferential surface of the axial one end portion of the outer ring.

Furthermore, in implementing the worm reducer of the present invention described above, an axial one end portion of the holding portion is provided with a large diameter stepped part, an inner diameter of which is larger than that of an axial another side portion (portion except for the axial one end portion), at an entire circumference or at intervals in the circumferential direction. A stepped surface at an axial another end portion of the large diameter stepped part defines the axial one side face of the housing. In a state where the axial another side of the outer ring is internally fitted in the axial another side portion of the holding portion and the axial another side face of the flange portion is abutted against the stepped surface, an axial another side face of the retaining plate supported by the housing is abutted against the axial one side face of the flange portion.

In implementing the worm reducer of the present invention described above, for example, the large diameter stepped part is configured by a pair of recess portions arranged on two radially opposite positions deviated by 90 degrees respectively from an engagement portion between the worm wheel and the worm teeth in the circumferential direction. Further, the flange portion is configured by a pair of flange pieces arranged on two radially opposite positions deviated by 90 degrees respectively from the engagement portion between the worm wheel and the worm teeth in the circumferential direction. Urging means is provided between the worm and the housing and radially urges the worm (the worm teeth is elastically urged against the worm wheel) to suppress a backlash at the engagement portion between the worm wheel and the worm teeth.

The electric assist device is configured to increase the torque of the output shaft of the electric motor through the worm reducer and apply the torque to the rotational shaft, i.e. the rotational shaft rotated by the steering wheel supported and fixed on a rear end portion, or a portion movable with the rotation of the rotational shaft (a pinion shaft configuring the steering gear unit or a rotational shaft arranged at an axial portion of a rack configuring the steering gear unit and away from a pinion shaft).

In particular, in the electric assist device of the present invention, the worm reducer is the worm reducer of the present invention as described above. In this case, the output shaft of the electric motor corresponds to the drive shaft, and the rotational shaft corresponds to the driven shaft.

### Effects of the Invention

According to the worm reducer and the electric assist device of the present invention configured as described above, it is easier to achieve reduction in size.

That is, in the present invention, in a bearing, i.e. a rolling bearing, which supports the base end side (the axial one side) of the worm, a flange portion is provided on an outer circumferential surface of the axial one end portion of the outer ring, and the flange portion is sandwiched between the axial one side face of the housing and the axial another side face of the retaining plate supported by the housing. Thus, an axial component of the counter force applied from an engagement portion between the worm wheel and the worm teeth to the worm can be supported by the axial one side face of the housing and the retaining plate. Accordingly, in order to support the axial component of the counter force, there is no need to provide the housing with a stepped surface abutted against the axial another side face of the outer ring, and no need to provide the wheel-side support portion 24 for ensuring the strength of the stepped surface 21 against the axial component of the counter force as in the configuration illustrated in the Fig. 9 (even in the where that the axial another side face of the outer ring is abutted against the stepped surface, there is no need to increase the length of the wheel-side support portion in the worm axial direction). Thus, the length of the housing in the worm axial direction can be reduced, so that the reduction in size of the worm reducer is easily achieved.

### Brief Description of the Drawings

Fig. 1 is an enlarged sectional view of a main part according to a first embodiment of the present invention.
Fig. 2 is an enlarged sectional view of a main part in a state where an electric motor is removed.
Fig. 3 is an end view as viewed from the right side in Fig. 2.
Fig. 4 is a view corresponding to Fig. 2, according to a second embodiment of the present invention.
Fig. 5 is an end view as viewed from the right side in Fig. 4.
Fig. 6 is an X-X sectional view of Fig. 5.
Fig. 7 is a view corresponding to Fig. 2, according to a modified embodiment of the present invention.
Fig. 8 is a partially cut side view showing an example of a conventional steering device for an automobile.
Fig. 9 is an enlarged sectional view of a main part in a conventional configuration of an exemplary worm reducer.

### Detailed Description of Embodiments

### [First embodiment]

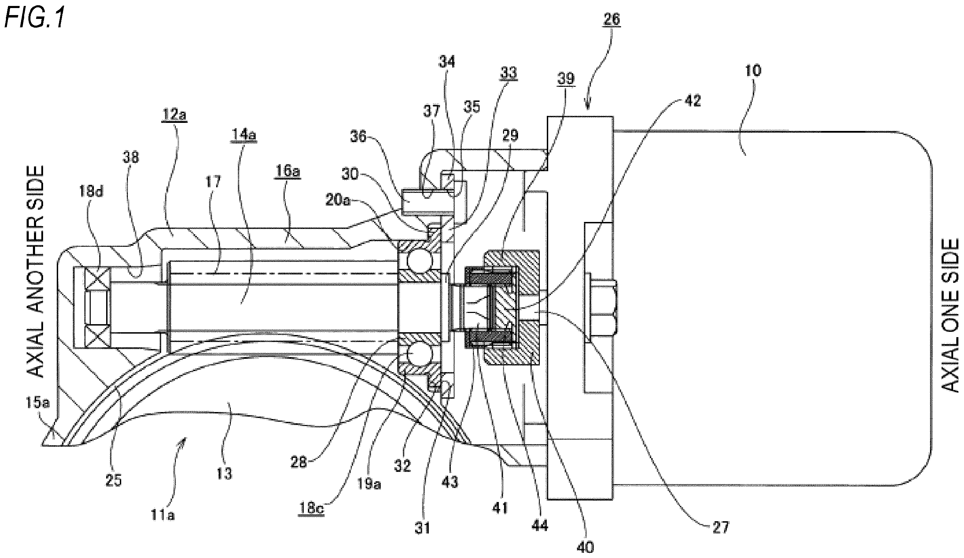

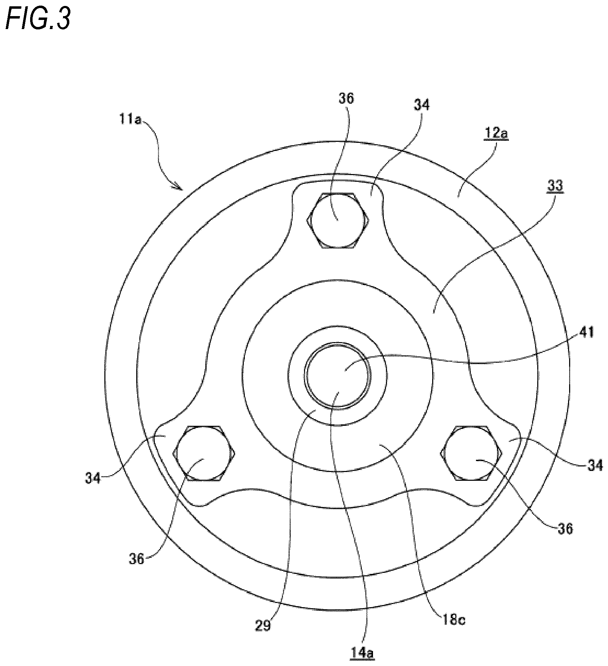

A first embodiment of the present invention is described with reference to Figs. 1 to 3. An electric assist device 26 according to the first embodiment is used while being assembled to, for example, an electric power steering device of so-called column assist type as shown in Fig. 8, and includes an electric motor 10 and a worm reducer 11a. The worm reducer 11a is configured to increase a torque of an output shaft 27 of the electric motor 10, which is then applied to a steering shaft 5 (see Fig. 8), and includes a housing 12a, a worm wheel 13, and a worm 14a. The housing 12a is supported and fixed to the electric motor 10 and includes a substantially disc shaped wheel accommodation portion 15a arranged to be concentric with the rotational shaft 5, and a substantially cylindrical shaped worm accommodation portion 16a arranged at a skew position with respect to the wheel accommodation portion 15a and having an axial intermediate portion connected (opened) to the wheel accommodation portion 15a. This housing 12a is manufactured by die casting a light alloy such as an aluminum alloy or injection molding of synthetic resin.

The worm wheel 13 is supported on a front end side potion of the steering shaft 5 serving as a driven shaft which is rotatably supported inside the wheel accommodation portion 15a to be concentric with the steering shaft 5 and rotates together with the steering shaft 5. Incidentally, a radial clearance 25 is provided between the outer circumferential surface of the worm wheel 13 and the outer circumferential surface of the wheel accommodation portion 15a to prevent the worm wheel 13 from contacting an inner surface of the wheel accommodation portion 15a during operation of the worm reducer 11a (during rotation of the worm wheel 13).

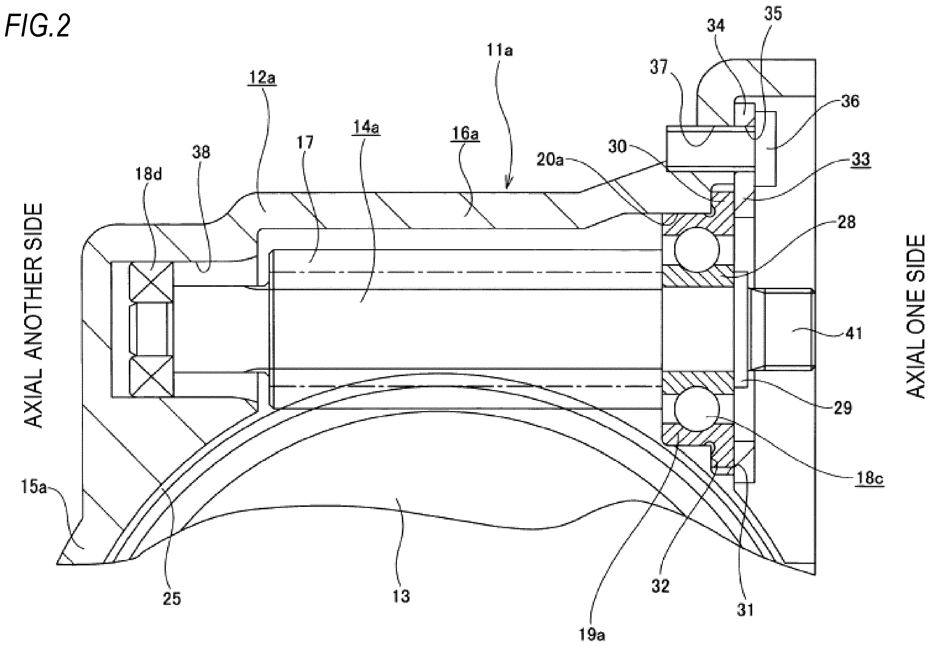

In a state where worm teeth 17 provided on an axial intermediate portion of the worm 14a is engaged with the worm wheel 13, the worm 14a is rotatably and swingably supported inside the worm accommodation portion 16a at two axial positions which interpose the worm teeth 17 by a pair of rolling bearings 18c, 18d. That is, an inner ring 28 configuring the rolling bearing 18c on the axial one side (the base end side, right side in Figs. 1 and 2) which corresponds to a bearing of the present invention, among the rolling bearings 18c, 18d, is press-fitted (externally fitted by an interference fit) into an axial one end side portion of the worm 14a while an axial another side face of a locking ring 29 locked at an axial one end portion of the worm 14a is abutted against an axial one side face of the inner ring 28. Accordingly, the axial displacement of the inner ring 28 with respect to the worm 14a is restricted.

An outer circumferential surface of the axial one end portion of the outer ring 19a configuring the rolling bearing 18c on the axial one side is formed with a flange portion 30 protruding radially outward at an entire circumference. The inner circumferential surface of the axial one end portion of the worm accommodation portion 16a (opening) is formed with a cylindrical surface shaped holding portion 20a except for a portion, and the axial one end portion of the holding portion 20a is formed with a large diameter stepped part 31 having the inner diameter larger than the inner diameter of the axial another side portion (the remainder except for the axial one end portion, a cylindrical surface shaped portion) at an entire circumference. The axial another side portion of the outer ring 19a (a cylindrical portion except for the flange portion 30) is internally fitted to the axial another side portion of the holding portion 20a by a clearance fit, and the axial another side face of the flange portion 30 is abutted against a stepped surface 32 (the axial another side face of the housing 12a) provided at the axial another end portion of the large diameter stepped part 31. In this state, an inner diameter side portion of the axial another side face of a substantially ring shaped retaining plate 33, an outer diameter side potion of which is supported and fixed to the housing 12a (an opening side end face of the worm accommodation portion 16a) is abutted against the axial one side face of the flange portion 30. In other words, the flange portion 30 of the outer ring 19a is axially sandwiched between the stepped surface 32 and the retaining plate 33. Accordingly, the axial displacement of the outer ring 19a with respect to the worm accommodation portion 16a is restricted. In the present embodiment, the axial another end face of the outer ring 19a is not abutted against (supported by) any portion of the housing 12a.

Incidentally, the rolling bearing 18c on the axial one side is configured such that the internal clearance is negative (negative clearance) and a center axis of the inner ring 28 can be easily deviated from a center axis of the outer ring 19a. Accordingly, the worm 14a can displace swingingly using the rolling bearing 18c on the axial one side as a center. Here, an elastic member, such as rubber, may be sandwiched at least one of a portion between the inner circumferential surface of the inner ring 28 and the outer circumferential surface of the worm 14a and a portion between the outer circumferential surface of the axial another side portion of the outer ring 19a and the holding portion 20a, to allow the worm 14a supported by the housing 12a to displace swingingly.

The outer circumferential portion of the retaining plate 33 includes attachment plate portions 34, 34 which protrude radially outward, at a plurality of positions (three positions in the illustrated example) in the circumferential direction. The outer diameter side portion of the retaining plate 33 is supported and fixed to the worm accommodation portion 16a by screwing and fastening bolts 36, 36 which are inserted into through holes 35 formed on each of the attachment plate portions 34, 34 to the threaded hole 37 which opens to the opening side end face of the worm accommodation portion 16a. Incidentally, the retaining plate 33 may be supported and fixed to the worm accommodation portion 16a by screwing and fastening nuts on bolts inserted into each of the through holes 35 and into through holes formed to pass through the worm accommodation portion 16a in the axial direction. Alternatively, as the retaining plate to abut against the axial one side face of the flange portion 30, the locking ring as in the conventional configuration illustrated in Fig. 9 may be used.

The inner ring configuring the rolling bearing 18d on the axial another side of the two rolling bearings 18c, 18d is pressed into the axial another side portion (a tip portion) of the worm 14a (externally fitted by an interference fit). The outer ring configuring the rolling bearing 18d on the axial another side is supported by a second holding portion 38 which has a bottomed cylindrical shape and is formed in an inner end portion (the axial another end) of the worm accommodation portion 16a. In the present embodiment, urging means (not shown) is arranged between the second holding portion 38 and the outer ring configuring the rolling bearing 18d on the axial another side and urges against the axial another side portion of the worm 14a in the radial direction (the worm teeth 17 are elastically urged towards the worm wheel 13 (downward in Figs. 1 and 2)), such that the engagement backlash between the worm wheel 13 and the worm teeth 17 is suppressed and the occurrence of tooth contact noise is suppressed.

Furthermore, in the present embodiment, an axial another end portion (the tip portion) of an output shaft 27 of the electric motor 10 is joined with an axial one end portion (the base end portion) of the worm 14a via a torque transmitting joint 39 so as to transmit torque. That is, the torque transmitting joint 39 is provided between a drive-side transmitting member 40 fixed to the axial another end portion of the output shaft 27 and a spline shaft 41 formed in the axial one end portion of the worm 14a. The torque transmitting joint 39 is configured by a drive-side elastic member 42 and a driven-side elastic member 43 which are made of elastomer material, such as rubber, and a coupling 44 made of material which is more difficult to deform (higher rigidity) compared to the elastomer material such as rubber. Accordingly, the transmitting characteristics of the torque between the output shaft 27 and the worm 14a can be divided into two stages based on the magnitude of the torque transmitted. Further, even if the worm 14a displaces swingingly, so that inconsistency occurs between the center axis of the output shaft 27 and the center axis of the worm 14a due to misalignment, the torque between the output shaft 27 and the worm 14a can be smoothly transmitted while the coupling 44 is inclined with respect to those axes. The details of the torque transmitting joint 39 will not be explained here as it is irrelevant to the subject of the present invention. The output shaft 27 may be directly joined with the worm 14a to transmit torque by spline engagement or the like.

According to the electric assist device 26 of the embodiment as described above, the longitudinal dimension of the worm reducer 11a may be suppressed in the axial direction of the worm 14a so as to achieve reduction in size.

That is, in the present embodiment, the flange portion 30 is formed on the outer circumferential surface of the axial one end portion of the outer ring 19a configuring the rolling bearing 18c on the axial one side among the pair of rolling bearings 18c, 18d which rotatably support the worm 14a in the worm accommodation portion 16a. The flange portion 30 is sandwiched between the stepped surface 32 formed in the worm accommodation portion 16a and the axial another side face of the retaining plate 33 supported and fixed to the worm accommodation portion 16a. Thus, an axial component of the counter force applied from the engagement portion between the worm wheel 13 and the worm teeth 17 to the worm 14a can be supported by the stepped surface 32 and the retaining plate 33. Accordingly, in order to support the axial component of the counter force, there is no need to provide the housing 12a with the stepped surface abutted against the axial another side face of the outer ring 19a, and no need to provide the wheel-side support portion 24 for ensuring the strength of the stepped surface 21 against the axial component of the counter force as in the configuration illustrated in the Fig. 9.

Accordingly, in the present embodiment, compared to the conventional configuration, since the position where the rolling bearing 18c supports the worm 14a can be moved toward the tip side of the worm 14a by the length corresponding to the omission of the wheel-side support portion 24, the axial dimension of the worm 14a can be reduced, so that the length of the worm reducer 11a in the axial direction of the worm 14a can be reduced. The worm reducer 11a and the electric assist device 26 may be reduced in size and weight. As a result, the layout of the electric power steering device assembled with the electric assist device 26 is improved.

### [Second Embodiment]

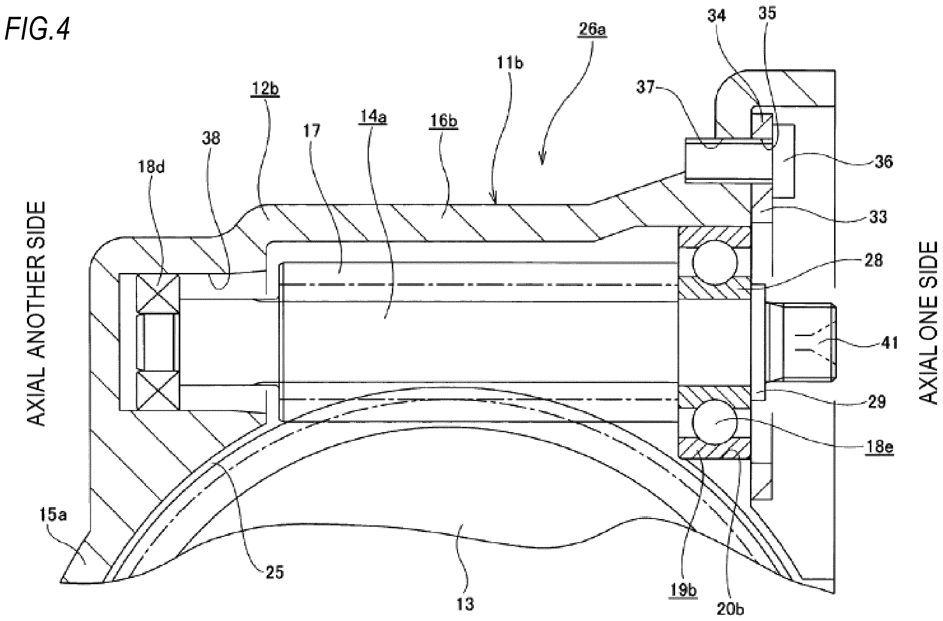

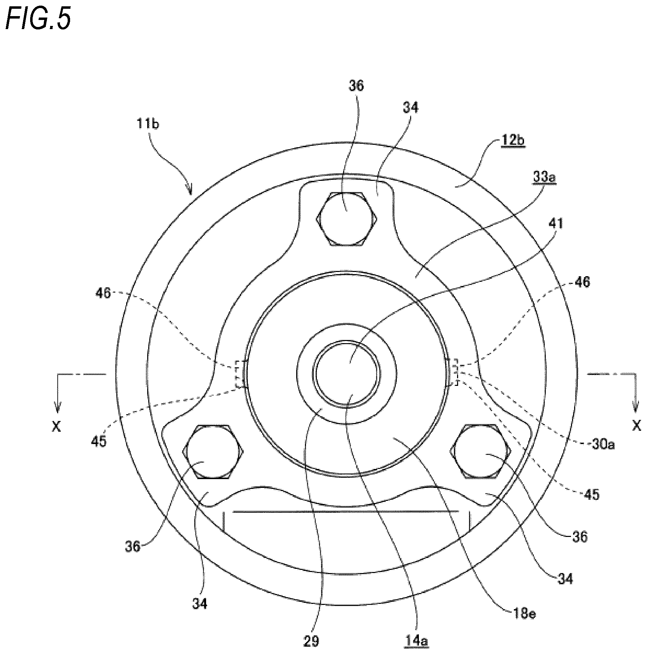

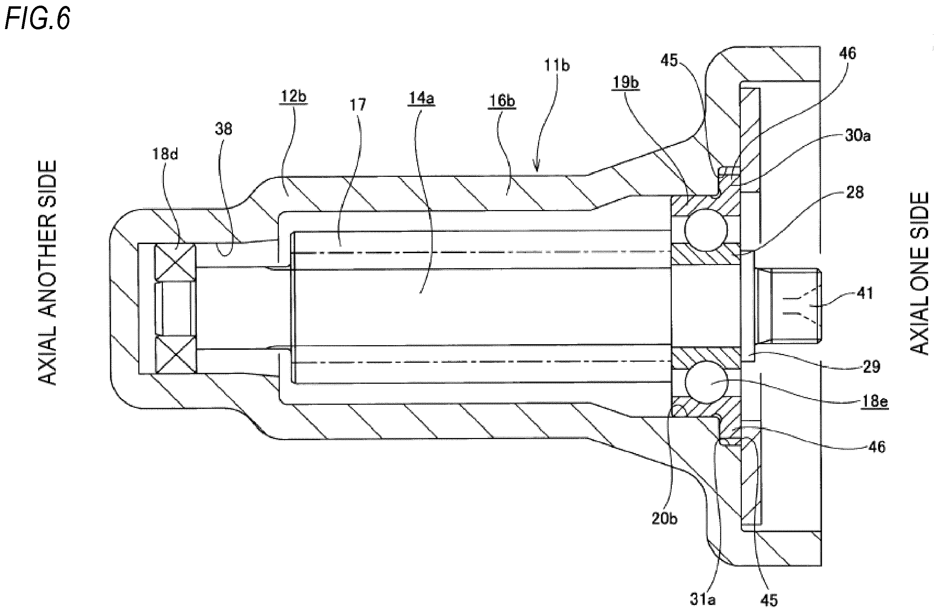

Figs. 4 to 6 show a second embodiment of the present invention. In an electric assist device 26a of the present embodiment, a large diameter stepped part 31a is formed on an axial one end portion of a holding portion 20b provided on the axial one end side portion of the worm accommodation portion 16b. In particular, in the present embodiment, the large diameter stepped part 31a is configured by a pair of recess portions 45, 45 which are arranged on two radially opposite positions deviated by 90 degrees respectively from the engagement portion between the worm wheel 13 and the worm teeth 17 in a circumferential direction. Correspondingly, a flange portion 30a which is arranged on an outer circumferential surface of an axial one end portion of an outer ring 19b configuring a rolling bearing 18e on an axial one side (base end side) is configured by a pair of flange pieces 46, 46. The pair of flange pieces 46, 46 are arranged on two radially opposite positions deviated by 90 degrees respectively from the engagement portion between the worm wheel 13 and the worm teeth 17 in the circumferential direction. Furthermore, the remainder of the outer ring 19b except for the two recess potions 45, 45 is internally fitted into the remainder of the holding portion 20b except for the two flange pieces 46, 46 by a clearance fit, and the two flange pieces 46, 46 are engaged with the two recess portions 45, 45 (arranged on the inner sides of the recess portions 45, 45). In this state, an axial another side face of the retaining plate 33 is abutted against an axial one side face of the two flange pieces 46, 46. Incidentally, in the present embodiment, both the flange pieces 46, 46 may be formed into cylindrical shape, or the axial side face may define a cylindrical surface to allow the rolling bearing 18e to easily displace swingingly.

In the embodiment described above, when the worm 14a is in a trend of swing based on the counter force applied to the worm 14a from the engagement portion between the worm wheel 13 and the worm teeth 17, the rolling bearing 18e on the axial one side swings around the two flange pieces 46. Furthermore, in the present embodiment, since the flange portion 30 is configured by the two flange pieces 46, compared with the case where the flange portion 30 is provided at an entire circumference on the outer circumferential surface of the axial one end portion of the outer ring 19 as in the first embodiment, a clearance between the outer circumferential surface of the outer ring 19b and the holding portion 20b is increased. Therefore, the rolling bearing 18e on the axial side is allowed to swing easily, and swing displacement of the worm 14a can be performed smoothly.

Configurations and functions of other portions are same as those of the first embodiment described above.

### [Third embodiment]

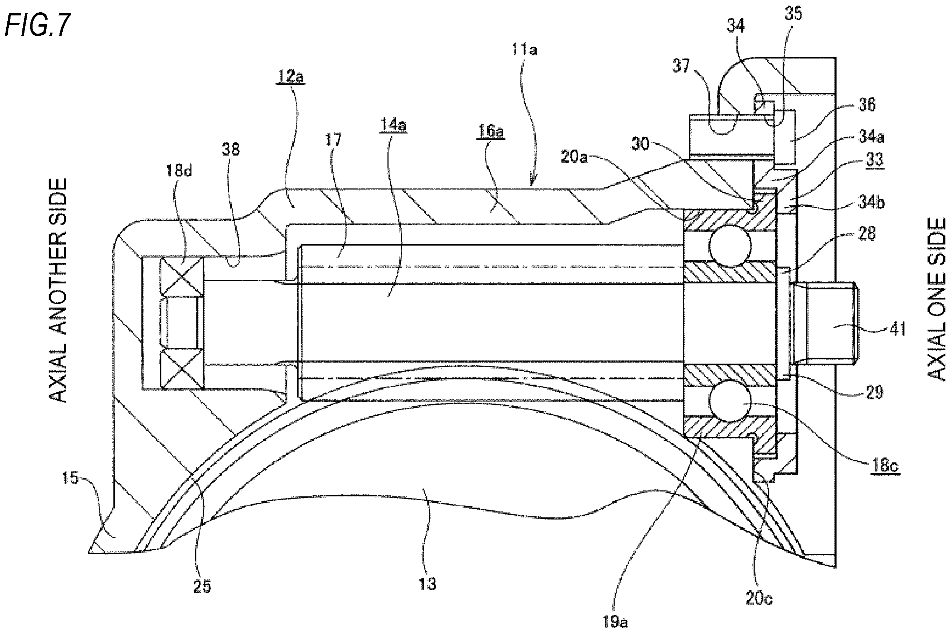

Fig. 7 shows a third embodiment of the present invention. In the present embodiment, the large diameter stepped part 31 is not formed on the axial one end of the holding portion 20a of the worm accommodation portion 16b. The axial another side portion of the outer ring 19a (the cylindrical portion expect for the flange portion 30) is internally fitted in the axial another end portion of the holding portion 20a by a clearance fit, and the axial another side face of the flange portion 30 is abutted against the axial one side face (an opening side end face 20c of the holding portion 20a) of the housing 12a, against which the attachment plate portion 34 of the retaining plate 33 abuts.

A step portion 34a is formed on a radially inner side of the attachment plate portion 34 of the retaining plate 33, and an auxiliary attachment plate portion 34b is formed continuously. The axial length of a step between the attachment plate portion 34a and the auxiliary attachment plate portion 34b is shorter than the axial length of the flange portion 30. Therefore, in a state where the retaining plate 33 is fixed to the housing 12a, the axial one side face of the flange portion 30 of the bearing is elastically abutted against the axial another side face of the auxiliary attachment plate portion 34b. Therefore, the axial component of the counter force applied by the engagement portion between the worm wheel 13 and the worm teeth 17 to the worm 14a is supported by the opening side end face 20c of the holding portion 20a and the axial another side face of the auxiliary attachment plate portion 34b.

Configurations and functions of other portions are same as those of the first embodiment described above.

In the meantime, the present invention is not limited to the above embodiments, and may be changed or improved as appropriate.

In the present embodiment, the inner ring 28 configuring the rolling bearing 18c is externally fitted to the axial one end side portion of the worm 14a by an interference fit, and the axial another side portion of the outer ring 19a is internally fitted in the axial another side portion of the holding portion 20a by a clearance fit, but the inner ring 28 may be externally fitted in the axial one end side portion of the worm 14a by a clearance fit, and the axial another side portion of the outer ring 19a is internally fitted to the axial another side portion of the holding portion 20a by an interference fit.

### Industrial Applicability

The case of applying the worm reducer to an electric power steering device of column assist type are described in the above embodiments, but the present invention is no limited to the application to the electric power steering device of column assist type and is applicable to other types of electric power steering device. That is, when the worm reducer is assembled in an electric power steering device of pinion assist type, the worm wheel of the worm reducer is supported and fixed on an input shaft (pinion shaft) of a steering gear unit. On the other hand, when the worm reducer is assembled in an electric power steering device of rack assist type, the worm wheel is supported and fixed on a rotational shaft arranged at an axial portion of a rack configuring the steering gear unit and away from a pinion shaft.

### Description of Reference Numerals

- 1: Steering wheel
- 2: Steering gear unit
- 3: Input shaft
- 4: Tie rod
- 5: Steering shaft
- 6: Steering column
- 7: Universal joint
- 8: Intermediate shaft
- 9: Universal joint
- 10: Electric motor
- 11, 11a: Worm reducer
- 12, 12a: Housing
- 13: Worm wheel
- 14, 14a: Worm
- *15, 15a: Wheel accommodation portion
- 16, 16a, 16b: Worm accommodation portion
- 17: Worm teeth
- 18a to 18e: Rolling bearing
- 19, 19a, 19b: Outer ring
- 20, 20a, 20b: Holding portion
- 21: Stepped surface
- 22: Locking groove
- 23: Locking ring
- 24: Wheel-side support portion
- 25: Radial clearance
- 26, 26a: Electric assist device
- 27: Output shaft
- 28: Inner ring
- 29: Locking ring
- 30, 30a: Flange portion
- 31, 31a: Large diameter stepped part
- 32: Stepped surface
- 33: Retaining plate
- 34: Attachment plate portion
- 35: Through hole
- 36: Bolt
- 37: Threaded hole
- 38: Second holding portion
- 39: Torque transmitting joint
- 40: Drive-side transmitting member
- 41: Spline shaft
- 42: Drive-side elastic member
- 43: Driven-side elastic member
- 44: Coupling
- 45: Recess portion
- 46: Flange piece

## Claims

1. A worm reducer (11a) comprising:
a housing (12a, 12b);
a worm wheel (13) which is supported on a driven shaft (5) rotatably supported by the housing (12a) to be concentric with the driven shaft (5) and rotates together with the driven shaft (5); and
a worm (14a), wherein in a state where an axial one end portion is joined with a drive shaft (27) provided at a skew position with respect to the driven shaft (5), and worm teeth (17) provided on an axial intermediate portion are engaged with the worm wheel (13), an axial one side portion with respect to a portion where the worm teeth (17) are provided is rotatably supported by a bearing (18c) with respect to the housing (12a, 12b), wherein
the bearing (18c, 18e) is a rolling bearing which includes: an outer ring (19a, 19b) having an outer ring raceway on an inner circumferential surface; an inner ring (28) having an inner ring raceway on an outer circumferential surface; and a plurality of rolling elements rotatably arranged between the outer ring raceway and the inner ring raceway,
an outer circumferential surface of an axial one end portion of the outer ring (19a, 19b) is provided with a flange portion (30a) which protrudes radially outward,
the housing (12a, 12b) is formed with a holding portion (20a, 20b) to be internally fitted with the outer ring (19a, 19b),
in a state where an axial another side portion of the outer ring (19a, 19b) is internally fitted in an axial another side portion of the holding portion (20a, 20b) and an axial another side face of the flange portion (30a) is abutted against an axial one side face of the housing (12a, 12b), an axial another side face of a retaining plate (33) supported to the housing (12a, 12b) is abutted against an axial one side face of the flange portion (30a),
the flange portion (30a) is arranged at an entire circumference or at intervals in a circumferential direction on the outer circumferential surface of the axial one end portion of the outer ring (19a, 19b),
an axial one end portion of the holding portion (20a, 20b) is provided with a large diameter stepped part (31, 31a), an inner diameter of which is larger than that of an axial another side portion, at an entire circumference or at intervals in the circumferential direction,
**characterized in that**
a stepped surface (32) at an axial another end portion of the large diameter stepped part (31, 31a) defines the axial one side face of the housing (12a, 12b), and
wherein in a state where the axial another side of the outer ring (19a, 19b) is internally fitted in the axial another side portion of the holding portion (20a, 20b) and the axial another side face of the flange portion (30a) is abutted against the stepped surface (32), an axial another side face of the retaining plate (33) supported by the housing is abutted against the axial one side face of the flange portion (30a), and the flange portion (30a) is axially sandwiched between the stepped surface (32) and the retaining plate (33).

2. The worm reducer according to claim 1,
wherein the large diameter stepped part (31, 31a) is configured by a pair of recess portions (45) arranged on two radially opposite positions deviated by 90 degrees respectively from an engagement portion between the worm wheel (13) and the worm teeth (17) in the circumferential direction,
wherein the flange portion (30a) is configured by a pair of flange pieces (46) arranged on two radially opposite positions deviated by 90 degrees respectively from the engagement portion between the worm wheel (13) and the worm teeth (17) in the circumferential direction, and
wherein urging means is provided between the worm (14a) and the housing (12a, 12b), and radially urges the worm (14a) to suppress a backlash at the engagement portion between the worm wheel (13) and the worm teeth (17).

3. An electric assist device comprising:
an electric motor (10); and
a worm reducer (11a) including a housing (12a, 12b); a worm wheel (13) which is supported on a rotational shaft (5) rotatably supported by the housing (12a, 12b) to be concentric with the rotational shaft (5) and rotates together with the rotational shaft (5); and a worm (14a), wherein worm teeth (17) are provided on an axial intermediate portion, and in a state where the worm teeth (17) are engaged with the worm wheel (13), an axial one side portion with respect to a portion where the worm teeth (17) are provided is rotatably supported by a bearing (18c, 18e) with respect to the housing (12a, 12b), wherein
an output shaft (27) of the electric motor (10) and the worm (14a) are connected to transmit torque,
the torque of the output shaft (27) of the electric motor (10) is increased and applied to the rotational shaft (5), and
the worm reducer (11a) is the worm reducer according to claim 1 or claim 2.

## Patentansprüche

1. Schneckenreduziergetriebe (11a), das Folgendes umfasst:
ein Gehäuse (12a, 12b);
ein Schneckenrad (13), das auf einer angetriebenen Welle (5) durch das Gehäuse (12a) rotierbar gelagert ist, um mit der angetriebenen Welle (5) konzentrisch vorzuliegen, und zusammen mit der angetriebenen Welle (5) rotiert; und
eine Schnecke (14a), wobei in einem Zustand, in dem ein axialer Endabschnitt mit einer Antriebswelle (27) verbunden ist, die in einer schrägen Position in Bezug auf die angetriebene Welle (5) bereitgestellt ist, und Schneckenzähne (17) an einem axialen Zwischenabschnitt bereitgestellt sind, in das Schneckenrad (13) eingreifen, ein axialer Seitenabschnitt in Bezug auf einen Abschnitt, in dem die Schneckenzähne (17) bereitgestellt sind, durch ein Lager (18c) in Bezug auf das Gehäuse (12a, 12b) rotierbar gelagert ist, wobei
das Lager (18c, 18e) ein Wälzlager ist, das Folgendes umfasst: einen äußeren Ring (19a, 19b), der eine äußere Ringlaufbahn auf einer Innenumfangsfläche aufweist; einen inneren Ring (28), der auf einer Außenumfangsoberfläche eine innere Ringlaufbahn aufweist; und eine Vielzahl von Wälzelementen, die rotierbar zwischen der äußeren Ringlaufbahn und der inneren Ringlaufbahn angeordnet sind,
wobei eine Außenumfangsoberfläche eines axialen Endabschnitts des äußeren Rings (19a, 19b) mit einem Flanschabschnitt (30a) bereitgestellt ist, der radial nach außen vorsteht,
wobei das Gehäuse (12a, 12b) mit einem Halteabschnitt (20a, 20b) ausgebildet ist, um den äußeren Ring (19a, 19b) im Inneren einzupassen;
wobei in einem Zustand, in dem ein anderer axialer Seitenabschnitt des äußeren Rings (19a, 19b) im Inneren in einen anderen axialen Seitenabschnitt des Halteabschnitts (20a, 20b) eingepasst ist und eine andere axiale Seitenfläche des Flanschabschnitts (30a) an einer axialen Seitenfläche des Gehäuses (12a, 12b) anliegt, eine andere axiale Seitenfläche einer Rückhalteplatte (33), die an dem Gehäuse (12a, 12b) gelagert ist, an einer axialen Seitenfläche des Flanschabschnitts (30a) anliegt,
wobei der Flanschabschnitt (30a) an einem Gesamtumfang oder in Abständen in Umfangsrichtung auf der Außenumfangsoberfläche des einen axialen Endabschnitts des äußeren Rings (19a, 19b) angeordnet ist,
ein axialer Endabschnitt des Halteabschnitts (20a, 20b) an einem Gesamtumfang oder in Abständen in Umfangsrichtung mit einem abgestuften Teil (31, 31a) mit großem Durchmesser bereitgestellt ist, dessen Innendurchmesser größer ist als jener eines anderen axialen Seitenabschnitts,
**dadurch gekennzeichnet, dass**
eine abgestufte Oberfläche (32) an einem anderen axialen Endabschnitt des abgestuften Teils (31, 31a) mit großem Durchmesser die eine axiale Seitenfläche des Gehäuses (12a, 12b) definiert, und
wobei in einem Zustand, in dem die andere axiale Seite des äußeren Rings (19a, 19b) im Inneren in den anderen axialen Seitenabschnitt des Halteabschnitts (20a, 20b) eingepasst ist und die andere axiale Seitenfläche des Flanschabschnitts (30a) an der abgestuften Oberfläche (32) anliegt, eine andere axiale Seitenfläche der Rückhalteplatte (33), die durch das Gehäuse gelagert ist, an der einen axialen Seitenfläche des Flanschabschnitts (30a) anliegt und der Flanschabschnitt (30a) axial zwischen der abgestuften Oberfläche (32) und der Rückhalteplatte (33) eingeschlossen ist.

2. Schneckenreduziergetriebe nach Anspruch 1,
wobei der abgestufte Teil (31, 31a) mit großem Durchmesser durch ein Paar von Vertiefungsabschnitten (45) ausgebildet ist, die an zwei radial entgegengesetzten Positionen angeordnet sind, die jeweils um 90 Grad von einem Eingriffsabschnitt zwischen dem Schneckenrad (13) und den Schneckenzähnen (17) in Umfangsrichtung abweichen,
wobei der Flanschabschnitt (30a) durch ein Paar von Flanschstücken (46) ausgebildet ist, die an zwei radial entgegengesetzten Positionen angeordnet sind, die jeweils um 90 Grad von dem Eingriffsabschnitt zwischen dem Schneckenrad (13) und den Schneckenzähnen (17) in Umfangsrichtung abweichen, und
wobei ein Druckmittel zwischen der Schnecke (14a) und dem Gehäuse (12a, 12b) bereitgestellt ist und die Schnecke (14a) radial drückt, um ein Zahnspiel am Eingriffsabschnitt zwischen dem Schneckenrad (13) und den Schneckenzähnen (17) zu unterdrücken.

3. Elektrische Assistenzvorrichtung, die Folgendes umfasst:
einen Elektromotor (10) und
ein Schneckenreduziergetriebe (11a), das Folgendes umfasst: ein Gehäuse (12a, 12b); ein Schneckenrad (13), das auf einer Drehwelle (5) durch das Gehäuse (12a) rotierbar gelagert ist, um mit der Drehwelle (5) konzentrisch vorzuliegen, und zusammen mit der Drehwelle (5) rotiert; und
eine Schnecke (14a), wobei Schneckenzähne (17) an einem axialen Zwischenabschnitt bereitgestellt sind und in einem Zustand, in dem die Schneckenzähne mit dem Schneckenrad (13) in Eingriff sind, ein axialer Seitenabschnitt mit Bezug auf einen Abschnitt, in dem die Schneckenzähne (17) bereitgestellt sind, durch ein Lager (18c, 18e) in Bezug auf das Gehäuse (12a, 12b) rotierbar gelagert ist,
wobei
eine Ausgangswelle (27) des Elektromotors (10) und die Schnecke (14a) zur Übertragung von Drehmoment verbunden sind,
das Drehmoment der Ausgangswelle (27) des Elektromotors (10) erhöht und an die Rotationswelle (5) angelegt wird, und
das Schneckenreduziergetriebe (11a) ein Schneckenreduziergetriebe nach Anspruch 1 oder 2 ist.

## Revendications

1. Réducteur à vis sans fin (11a) comprenant :
un boîtier (12a, 12b) ;
une roue à vis sans fin (13) qui est supportée sur un arbre entraîné (5) supporté en rotation par le boîtier (12a) pour être concentrique avec l'arbre entraîné (5) et tourne conjointement avec l'arbre mené (5) ; et
une vis sans fin (14a), dans lequel, dans un état où une première partie d'extrémité axiale est jointe à un arbre d'entraînement (27) prévu dans une position oblique par rapport à l'arbre entraîné (5), et des dents de vis sans fin (17) prévues sur une partie intermédiaire axiale sont mise en prise avec la roue à vis sans fin (13), une première partie latérale axiale par rapport à une partie où les dents de vis sans fin (17) sont prévues est supportée en rotation par un palier (18c) par rapport au boîtier (12a, 12b), dans lequel
le palier (18c, 18e) est un palier à roulement qui comprend : une bague extérieure (19a, 19b) ayant un chemin de roulement de bague extérieure sur une surface circonférentielle intérieure ; une bague intérieure (28) ayant un chemin de roulement de bague intérieure sur une surface circonférentielle extérieure ; et une pluralité d'éléments roulants agencés de manière rotative entre le chemin de roulement de de bague extérieure et le chemin de roulement de bague intérieure,
une surface circonférentielle extérieure d'une première partie d'extrémité axiale de la bague extérieure (19a, 19b) est pourvue d'une partie de bride (30a) qui fait saillie radialement vers l'extérieur,
le boîtier (12a, 12b) est formé avec une partie de maintien (20a, 20b) devant être ajustée intérieurement avec la bague extérieure (19a, 19b),
dans un état où une autre partie latérale axiale de la bague extérieure (19a, 19b) est ajustée intérieurement dans une autre partie latérale axiale de la partie de maintien (20a, 20b) et une autre face latérale axiale de la partie de bride (30a) est mise en butée contre une première face latérale axiale du boîtier (12a, 12b), une autre face axiale d'une plaque de retenue (33) supportée sur le boîtier (12a, 12b) est mise en butée contre une première face latérale axiale de la partie de bride (30a),
la partie de bride (30a) est agencée sur toute une circonférence ou à des intervalles dans une direction circonférentielle sur la surface circonférentielle extérieure de la première partie d'extrémité axiale de la bague extérieure (19a, 19b),
une première partie d'extrémité axiale de la partie de maintien (20a, 20b) est pourvue d'une partie étagée de grand diamètre (31, 31a), dont un diamètre intérieur est plus grand que celui d'une autre partie latérale axiale, sur toute une circonférence ou à intervalles dans la direction circonférentielle,
**caractérisé en ce que**
une surface étagée (32) au niveau d'une autre partie d'extrémité axiale de la partie étagée de grand diamètre (31, 31a) définit la première face latérale axiale du boîtier (12a, 12b), et
dans lequel dans un état où une autre partie latérale axiale de la bague extérieure (19a, 19b) est ajustée intérieurement dans l'autre partie latérale axiale de la partie de maintien (20a, 20b) et une autre face latérale axiale de la partie de bride (30a) est mise en butée contre la surface étagée (32), une autre face latérale axiale de la plaque de retenue (33) supportée par le boîtier (30a, 12b) est mise en butée contre la première face latérale axiale de la partie de bride (30a), et la partie de bride (30a) est enserrée axialement entre la surface étagée (32) et la plaque de retenue (33).

2. Réducteur à vis sans fin selon la revendication 1,
dans lequel la partie étagée de grand diamètre (31, 31a) est configurée par une paire de parties en retrait (45) agencées sur deux positions radialement opposées déviées de 90 degrés respectivement par rapport à une partie de mise en prise entre la roue à vis sans fin (13) et les dents de vis sans fin (17) dans la direction circonférentielle,
dans lequel la partie de bride (30a) est configurée par une paire de parties en retrait (46) agencées sur deux positions radialement opposées déviées de 90 degrés respectivement par rapport à la partie de mise en prise entre la roue à vis sans fin (13) et les dents de vis sans fin (17) dans la direction circonférentielle, et
dans lequel des moyens de poussée sont prévus entre la vis sans fin (14a) et le boîtier (12a, 12b), et poussent la vis sans fin (14a) radialement pour supprimer un jeu au niveau de la partie de mise en prise entre la roue à vis sans fin (13) et les dents de vis sans fin (17).

3. Dispositif d'assistance électrique comprenant :
un moteur électrique (10) ; et
un réducteur à vis sans fin (11a) comprenant un boîtier (12a, 12b) ; une roue à vis sans fin (13) qui est supportée sur un arbre de rotation (5) supporté en rotation par le boîtier (12a, 12b) pour être concentrique avec l'arbre de rotation (5) et tourne conjointement avec l'arbre de rotation (5) ; et une vis sans fin (14a), dans lequel des dents de vis sans fin (17) sont prévues sur une partie intermédiaire axiale, et dans un état où les dents de vis sans fin (17) sont mises en prise avec la roue à vis sans fin (13), une première partie latérale axiale par rapport à une partie où les dents de vis sans fin (17) sont prévues est supportée en rotation par un palier (18c, 18e) par rapport au boîtier (12a, 12b), dans lequel
un arbre de sortie (27) du moteur électrique (10) et la vis sans fin (14a) sont connectés pour transmettre un couple,
le couple de l'arbre de sortie (27) du moteur électrique (10) est augmenté et appliqué à l'arbre de rotation (5), et
le réducteur à vis sans fin (11a) est le réducteur à vis sans fin selon la revendication 1 ou la revendication 2.
